# EUROPEAN PATENT APPLICATION

(11) **EP 1 903 085 A1**
(43) Date of publication of application: **26.03.2008**
(21) Application number: 07022159.3
(22) Date of filing: 07.11.2003
(51) Int. Cl.: C09J 163/10, C08F 290/06, C04B 26/18

(54) **Vinyl ester adhesive compositions**

(30) Priority: 08.11.2002 US 425091 P; 06.10.2003 US 679871
(62) Divisional of application: 03292799.8
(71) Applicant: Illinois Tool Works Inc., Glenview, IL 60026-1215 (US)
(72) Inventor: Chabut, Barbara, 26000 Valence (FR); Liu, Wen-Feng, Napperville Illinois 60565 (US)
(74) Representative: Bloch, Gérard

(57) **Abstract**

A composition capable of providing excellent bonding characteristics, including bond strength, even at relatively high temperatures and even without the use of styrene as a reactive diluent, comprising polymerizable vinyl ester compounds; preferably in combination with a select reactive diluent for the polymerizable vinyl ester compounds, wherein the polymerizable vinyl ester compounds are preferably present in the adhesive compositions in amounts of from 10 wt% to 30 wt%.

## Description

### RELATED APPLIATIONS

The present application is related to and claims the priority benefit of United States provisional application number 60/525,091, filed on November 8, 2002, which is incorporated herein by reference.

EP 1424 378 is also pending before the European Patent Office and relates to a similar subject matter.

### TECHNICAL FIELD

The present invention relates to adhesive compositions especially well adapted for use in anchoring materials in or to concrete or masonry, and to methods of anchoring. More particularly, this invention relates to adhesive compositions comprising polymerizable vinyl ester compositions, to methods for bonding which such compositions, and to the bonded structures produced using such compositions or methods.

### BACKGROUND OF THE INVENTION

Many applications require that a material be anchored in or to concrete or masonry. For example, anchor bolts are employed in various fields of engineering and construction as strengthening or reinforcing members in rock formations, or in concrete or masonry structural bodies. The bolts, which are typically metallic, are inserted into holes in the rock formations, or concrete or masonry structural bodies, and are fixed or anchored therein by means of an anchor composition. Objects that have been attached to concrete or masonry using anchor bolts include, but are not limited to, electrical conduits, panels, piping and wall sections. Adhesive anchors are preferred over mechanical anchors for anchoring in soft concrete or masonry because, among other reasons, adhesive anchors place less stress on the concrete or masonry. As used herein, the term "masonry" shall include, but is not limited to, stone, brick, ceramic tile, cement tile, hollow concrete block and solid concrete block.

It has been known to use curable synthetic resins as the primary adhesive for the safe fastening of anchoring rods, bolts and similar devices in solid rock, masonry, concrete and the like. Typically, but not exclusively, certain of the starting components of the adhesive composition are kept separate from one another and then combined at or near the point of fastening. In such so called two part systems, the components which are kept separate until the time of use are combined at the site and then introduced to the anchor bolt, the bore or hole prepared to receive the bolt, or both. Thus, the formation of the cured adhesive body that binds the fastener to the base structure is initiated at about the time the fastener is placed in its final position.

Vinyl ester resins have been recognized as useful as an active component in a wide range of adhesive applications, including anchoring rods, bolts and similar devices in concrete and the like. For example, U.S. Patent No. 4,944,819 discloses the use of unsaturated polyester resins with reactive diluents, such as styrene. This patent specifically mentions the use of vinyl esters, notably the reaction products of bisphenols and novolak with unsaturated carboxylic acids, such as acrylic acid. This patent teaches the formulation of such adhesives by the use of styrene, or acrylates, as a reactive diluent for the vinyl ester compounds of the adhesive.

The present inventors have come to appreciate, however, that adhesive formulations of the type disclosed generally in the '819 patent are less than desirable is several respects. The requirement for styrene in the adhesive composition, for example, creates a potential health and safety problem which is at least commercially detrimental. Furthermore, while adhesives of the type disclosed in the '819 patent may perform adequately in certain applications, there is no suggestion to formulate an improved adhesive which provides superior performance in relatively high temperature environments. As will be appreciated, adhesives which provide strong adhesive bonds even in high temperature conditions are highly advantageous for use in many construction or engineering projects where the bond has the potential to be exposed to high temperature conditions.

### SUMMARY

Applicants have discovered a composition formed from a novel combination of components which, together, are capable of providing excellent bonding characteristics, including bond strength, even at relatively high temperatures and even without the use of styrene as a reactive diluent in the composition.

Applicants have found that exceptional results can be achieved in accordance with the present invention by compositions formed from a select class of polymerizable vinyl ester compounds, preferably in combination with a select reactive diluent for the polymerizable vinyl ester compounds. Furthermore, applicants have discovered that unexpectedly superior performance is possible when the polymerizable vinyl ester compounds are present in the adhesive compositions in amounts of from___10 wt% to___30 wt%, and even more preferably from ___10 wt% to ___25 wt%, particularly when such amounts are used in combination with a substantially styrene-free reactive diluent, preferably vinyl toluene, in a vinyl ester:reactive diluent weight ratio of from _____0.8 to _____3, and even more preferably from _____0.8 to;_____1.5. Furthermore, applicants have found that unexpectedly superior results are generally achieved when the polymerizable,vinyl ester compounds are present in the adhesive compositions in amounts of from 70 parts by weight based on active components pbwa to 95 pbwa, and even more preferably 85 pbwa to 95 pbwa, wherein the term "pbwa" means parts by weight based on active components, as more particularly defined hereinafter.

The instant case relates to a composition according to claim 1.

DE-C-41 21 833 and EP-A-0 199 671 relate to similar adhesive compositions for use in anchoring materials, but the composition of the instant case distinguishes over the teaching of these references by the fact that it includes vinyl ester, or polymer, and ethylenically insaturated monomer.

Generally, the compositions of the present invention also include an ethylenically unsaturated monomer reactive with the polylerizable vinyl ester. It is sometimes common practice to refer to such a combination of polymerizable polymer and reactive diluent as a "resin", and such terminology will sometimes be used herein to refer to such combinations. In certain highly preferred aspects of the present invention, the reactive diluent comprises vinyl toluene, and even more preferably contains no substantial portion of styrene.

An important aspect of the present invention is the provision of adhesive compositions which produce excellent bond strength, particularly at relatively high temperatures. In preferred embodiments, the present adhesive compositions achieve pull out performance at one hour at a temperature of 23°C of at least___60 KN, and at ___24 hour at a temperature of 23 °C of at least about 70 KN, and after 24 hours at 80°C has a pull out force measured at a___ temperature of 80° C of at least 45 KN, with pull out force being measured as in the examples hereof.

### DETAILED DESCRIPTION OF PREFERRED EMBODIMENTS

The present invention provides adhesive compositions, and more particularly compositions and methods for anchoring materials in or to concrete or masonry. The materials to be anchored in or to concrete or masonry include, but are not limited to, metallic objects, such as steel bolts, ceramics, other concrete or masonry objects, plastics, glasses and woods.

The present compositions comprise active components and optionally but preferably certain inactive components. As used herein, the term "active components" refers to those components which participate in curing of the composition, either directly as a reactant or indirectly as a catalyst, inhibitor or the like.

In terms of active components, the present compositions comprise at least one polymerizable vinyl ester compound and optionally but preferably a reactive diluent for the polymerizable vinyl ester compound. Other active components that are included in certain preferred embodiments include, but are not limited to, catalayst (preferably a free-radical catalyst), chain transfer agent, inhibitor (preferably a free-radical inhibitor), activator, promoter, impact modifier, crosslinking agent and coupling agent. In terms of inactive components, it is desirable in certain embodiments to include in the composition filler, non-reactive diluent, thixotropic agent, fragrance, antifoaming agents, wetting agents, and fungicides.

It is contemplated that the relative proportions of the components included in the present compositions may vary widely depending on numerous factors, such as for example the contemplated environment of use, the desired strength of the bond to be formed, the particular materials to be bonded, and other factors. Nevertheless, the preferred aspects of the present adhesive compositions comprise from 5 weight percent (wt.%) to___50 wt% of polymerizable vinyl ester compound, more preferably from about 10 wt% to___40 wt%, and even more preferably from___10 wt% to 30 wt%. It is also preferred that the present adhesive compositions comprise from 20 pbwa to 65 pbwa of polymerizable vinyl ester compound, more preferably from ______25 pbwa to ___60 pbwa, and even more preferably from ______30 pbwa to _______60 pbwa. As used herein, the designation "pbwa" means parts by weight based on the total active components in the adhesive composition. Furthermore, unless otherwise specifically indicated to the contrary, the weight percentages and pbwa of the components in the present adhesive compositions as specified herein refer to the composition after it has been formulated for use in bonding. Thus, for two part compositions of the type described hereinafter, the percentages and pbwa values refer to the adhesive composition based on the combination of parts A and B of such compositions.

As described above, the present compositions preferably contain polymerizable vinyl ester compound in the form of vinyl ester resin which includes reactive diluent. Although the relative amounts of reactive diluent of vinyl ester may vary widely within the scope hereof, it is generally preferred that the vinyl ester resin comprise from ___35 wt.% to wt.%, on the basis of the total weight of the resin, of reactive diluent, with the balance preferably consisting essentially of polymerizable vinyl ester compound. In such embodiments, it is preferred that the present adhesive compositions comprise from __ 20 weight percent (wt.%) to____70 wt% of vinyl ester resin, more preferably from·_____30 wt% to ________50 wt%, and even more preferably from______35 wt% to ________45 wt% of said resin. It is also preferred that the present adhesive compositions comprise from ________70 pbwa to________98 pbwa of said resins, more preferably from_______75 pbwa to:__ 95 pbwa, and even more preferably from about 85 pbwa to________95 pbwa of such resins.

The composition may be dispensed using various methods known to those skilled in the art. For example, the composition may be dispensed using a dual cartridge device similar to a caulk gun, or the composition may be dispensed using a glass or film capsule. The composition may also be dispensed in bulk from bulk containers using meter-mix equipment, which is known to those skilled in the art, U.S. Pat. Nos. 4,651,875, 4,706,806 and 4,729,696, the disclosures of each of which are incorporated herein by reference, are directed to the use of glass capsules to dispense the composition in the form of a two part system. It is recognized that the amounts of the various components of the anchor composition may vary depending on many factors, including on the type of dispensing system used.

In preferred dispensing methods, the anchor composition is formed by the mixing of a first composition (sometimes referred to herein as the "A" part) which contains the resin, and which may contain an inhibitor to prevent premature polymerization, but does not include any substantial amount of curing catalyst and a second composition (sometimes referred to herein as the "B" part) which contains the catalyst and which remains apart from the A part until the time of use. Typically, mixing of the A part and the B part occurs immediately before the anchor composition is to be used. For example, when the anchor composition is dispensed using a dispensing gun, the first composition and the second composition, which are contained in separate cartridges of the dispensing gun, may be mixed as they are ejected from the cartridges and applied to either the concrete or masonry, the material to be anchored to the concrete or masonry, or both. Similarly, when the anchor composition is dispensed using a glass capsule, the capsule is typically comprised of two chambers that contain the first composition and the second composition, respectively. When the glass capsule is crushed, the two chambers are crushed and the contents are allowed to mix, forming the anchor composition. For embodiments in which the anchor composition is dispersed in bulk, the A part and the B part may be stored in separate bulk containers and combined through pumping with mixing in the appropriate ratio to make the anchor composition.

Although the present invention is described above in the form of a two part composition, it is contemplated that it may be possible to formulate adhesives in accordance with the present invention as a one-part adhesive, and such formulations are within the scope of the present invention. For example, it may be possible to formulate the present adhesives as in the form of a single component anaerobic adhesive, and such a formulation is within the scope hereof.

It is also generally contemplated that the amount of catalyst used in the present compositions may vary widely depending on numerous factors, the present adhesive compositions preferably comprise from___0.5 wt% to ___10 wt% of catalyst, more preferably from_____1 wt% to ___8 wt%, and even more preferably from __ 2 wt% to _____6 wt% catalyst. It is also preferred that the present adhesive compositions comprise from ___0.5 pbwa to__ 25 pbwa of catalyst, more preferably from _____5 pbwa to ___20 pbwa, and even more preferably from____ 5 pbwa to _____15 pbwa of catalyst.

Initiators and activators, if included in adhesive compositions of the present invention, as is preferred, are preferably present in amounts of up to _____0.05 wt% to ___1 wt%, and even more preferably from _____0.1 wt96 to _____0.5 wt%. It is also preferred that the present adhesive compositions comprise from _____0.1 pbwa to _____5 pbwa of initiator and even more preferably from ___0.1 pbwa to ___1 pbwa.

Promoters are typically used in amounts up to _____0.5% by weight of the composition, and preferably about 1 part per million to _____0.5% by weight of the entire composition.

The preferred aspects of the above-noted components, together with the type and amounts of other additives to the present compositions, are described in detail below.

### THE POLYMERIZABLE VINYL ESTER COMPOUND

It is contemplated that known methods for formation of polymerizable vinyl ester compounds and resins can be adapted in view of the teachings contained herein to form compounds and resins in accordance with the present invention, and all such materials are considered to be within the scope hereof. In preferred embodiments, the polymerizable vinyl ester of the present invention is formed by the reaction of an epoxy compound with an ethylenically unsaturated carboxylic acid, anhydride or alcohol, usually with the use of a polymerization inhibitor to prevent the vinyl ester resin from gelling. In view of the teaching contained herein, it is believed that vinyl ester resin in accordance with the present invention may be prepared by any of the methods disclosed in any of the following patents U.S. Pat. No. 3,256,226 to Fekete et al., and No. 3,317,465 to Doyle et al., both assigned to H. H. Robertson Co.; No. 3,345,401 to May; No. 3,373,221 to May; No. 3,377,406 to Newey; and No. 3,432,478 to May, all assigned to Shell Oil Co.; No. 3,548,030 to Jernigan; and No. 3,564,074 to Swisher et al., both assigned to Dow Chemical Co.; No. 3,634,542 to Dowd et al.; and No. 3,637,618 to May, both assigned to Shell Oil Co.

Preferably, the epoxy vinyl ester is prepared by reacting the polyepoxide and the acid or derivative thereof in appropriate amounts, generally with heating and in the presence of a catalyst, such as a trivalent chromium salt, as for example CrCl₃ ; or a phosphine; alkali, onium salt; or a tertiary amine, for example, tris(N,N-dimethylanunomethyl phenol). Optionally, the epoxy vinyl ester resin can be formed in the presence of a non-resinous, vinyl monomer, preferably not including styrene and preferably including vinyl toluene. The resulting product which is a combination of the polymerizable vinyl ester and reactive diluent will, in such an instance, constitute what is referred to herein as a "vinyl ester resin" and more specifically as an "epoxy vinyl ester resin."

Examples of epoxy compounds which may be used in such formation reactions include but are not limited to those found in bisphenolic type epoxy resins, epoxy novolac type resins, amine type epoxy resins, copolymerized epoxy resins, multifunctional epoxy reisns and the like. Preferably the epoxy used to form the present polymerizable vinyl ester has about 2 to about 3 of an average number of epoxy groups in the molecule.

The bisphenolic type epoxy resin compounds which may be used include, but are not limited to, those found in bisphenol A, F and S type epoxy resins, each of such compounds preferably having 2 glycidyl groups in its molecule. Commercially available examples of bisphenol A type epoxy resin having 2 glycidyl groups in the molecule include those available from Reichhold under the trade designation EPOTUF® 37-140. Commercially available examples of bisphenol F type epoxy resin having 2 glycidyl groups in the molecule include those available from Reichbold under the trade designation EPOTUF® 37-138. In certain embodiments bisphenol S type epoxy resin having 2 glycidyl groups in the molecule, and brominated bisphenol A type epoxy resins, preferably also having 2 glycidyl groups in the molecule, may also be used.

Epoxy novolac type resin compounds may also be used, and such resins are exemplified by phenolic novolac, cresolic novolac, aliphatic, alicyclic or monocyclic epoxy resins.

Aliphatic type epoxy resin compounds may also be used, and such resins include, among others, hydrogenated bisphenol A type epoxy resin having 2 glycidyl groups in its molecule. Such resins are commercially available from Reichhold under the trade designation EPOTUF® 37-051.

Alicyclic epoxy type resin compounds may also be used, and such resin compounds include, among others, alicyclic diepoxyacetal, dicyclopentadiene dioxide and vinylcyclohexene dioxide and the like, which have 2 epoxy groups in the molecule. Such epoxy resin compounds having one epoxy group in the molecule includes vinylhexene monoxide, glycidyl methacrylate and the like.

Monocyclic epoxy type resin compounds may also be used, and such resin compounds include, among others, resorcinol diglycidyl ether, diglycidyl terephthalate and the like.

Amine type epoxy resin compounds may also be used, and such resin compounds include, among others, compounds having 4 glylcidyl groups in the molecule.

These epoxy resins type compounds can be used alone or in combination. The average number of glycidyl groups in the molecule of the epoxy resin is preferably from_____ to __ 6, more preferably from _____2 to ___4. and even more preferably from __ 2 to ___3.

Examples of vinyl carboxylic acids and related compounds which may be used in the formation of the present polymerizable vinyl esters include but are not limited to ethylenically unsaturated mono- and dicarboylic acids such as acrylic acid, methacrylic acid, itaconic acid, crotonic acid, cinnamic acid, fumanic acid, maleic acid, maleic anhydride and the like, unsaturated (mcth)acrytates such as methyl (meth)acrylate, ethyl (meth)acrylate, propyl (meth)acrytate, butyl (meth)acrylate, 2-ethylhexyl (meth)acrylate, glycidyl (meth)acrylate, dodecyl (meth)acrylate and the like, nitriles such as (meth)acrylonitrile, amides such as (meth)acrylamide, N-methylol (meth)acrytamide, diacetone (meth)acrylamide, diethylaminoethyl (meth)acrylamide and the like. For certain embodiments, methacrylic acid is preferred. Examples of alcohols having an unsaturated group includes, among others, half-esters derived from unsaturated dicarboxylic acids and/or unsaturated alcohols-such as hydroxyalkyl acrylates, for example, bydroxyethyl (meth)acrylate, hydroxypropyl (meth)acrylate, hydroxybutyl (meth)acrylate, pentaerythritol tri(meth)acrylate, glycerin di(meth)acrylate and the like. Preferably, the acid or related unsaturated compound is one in which the reactive vinyl group is a terminal group.

Regarding the reactivity, flow performance and miscibility of the polymerizable vinyl ester resin, it is generally preferred that the vinyl ester resins of the present invention have an ester number of from_____ 0 to____25 mg KOH/g resin and which, when available in the form of a solution of 50 to 70% of reactive diluent monomer, have a viscosity of from _____50 to ___ 2000 mPa s at 23°C.

Generally, the polymerizable vinyl ester is present in the anchoring composition in the range of from______ 20% to ______90% by weight of the entire adhesive composition, and even more preferably in an amount in the range of_______ 20 % to________70%.

In highly preferred embodiments, the polymerizable vinyl ester corresponds to the form below : 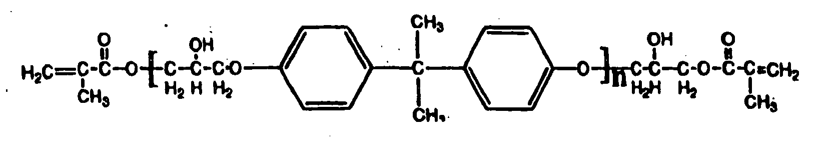 where n is from___1 to ____5 and wherein the ratio of n to the terminal vinyl units is, on average for the composition, from _____0.4 to ____2.0. A vinyl ester composition corresponding to formula (IV) is available from Reichhold under the trade designation Norpol Dion Ver 9165 in a 65% by weight solution with vinyl toluene.

### THE REACTIVE DILUENT

In general, it is contemplated that the teachings of the present invention can be used with great advantage in connection with any one of the large number of known reactive diluents, particularly reactive monomers. Example of reactive diluents which may be use in connection with the broad teachings hereof include, among others, aliphatic vinyl compounds such as vinyl-, propene- and butene chloride, aromatic vinyl compounds such as styrene, vinyl toluene, divinyl benzene, p-t-butylstyrene and so on, diene compounds such as butadiene, isoprene, chloroprene, pentadiene and the like. Such reactive diluents can be used alone or in combination. Nevertheless, the preferred aspects of the present invention contemplate the avoidance of styrene in the composition, and for this reason the preferred compositions do not contain a substantial amount of styrene. In highly preferred embodiments, the reactive diluent comprises vinyl toluene, an preferably comprises at least_______50% by weight of vinyl toluene, and even more preferably at least___70% by weight of vinyl toluene, with the balance of the components making up the reactive diluent, if any, being free of any substantial amount of styrene.

While it is contemplated that the amount of reactive diluent relative to the amount of polymerizable vinyl ester in the composition may vary widely depending on numerous factors particular to each application and contemplated use, it is generally preferred that the vinyl ester:reactive diluent weight ratio is from 0.8 to___3, more preferably from 0.8 to ___1.5, and even more preferably from___0.8 to___1.3. Optionally but preferably the polymerizable vinyl ester is soluble in the reactive diluent.

### INHIBITOR

Inhibitors, and particularly free-radical inhibitors, are known to those skilled in the art. A preferred free-radical inhibitor is hydroquinone. Other suitable free-radical inhibitors include, but are not limited to, trimethylhydroquinone, hydroquinone monomethyl ether, t-butyl catechol and naphthaquinone. It is also contemplated that more than one free radical inhibitor may be employed in the anchor composition. The polymerization inhibitor preferably comprises, more preferably comprises in major proportion, and even more preferably consists essentially of hydroquinone. Of course other inhibitor may be used alone or in combination with hyrdoquinone, such as for example, parabenzoquinone, methylhydroquinone, catechol and the like which are conventionally employed as polymerization inhibitors.

While it is contemplated that the amount of inhibitor in the composition may vary widely depending on numerous factors particular to each application and contemplated use, it is generally preferred that the inhibitor is present in amounts of from___0.005 wt% to___5 wt%, and even more preferably from ___0.01 wt% to ___0.1 wt%. Optionally but preferably the polymerizable vinyl ester is soluble in reactive diluent.

### INITIATOR

The vinyl ester resin composition of this invention can be easily cured by adding a curing catalyst, an initiator, or both. Representative initiators include aldehyde-amine condensation product, organic sulfonyl chlorides, tertiary amines or mixtures thereof. For example, such a condensation product can be made from butyraldehyde and a primary amine, such an amine being, for example, aniline or butylamine. Also suitable as activators are tertiary amines such as N,N-dimethyl aniline, N,N-dimethyl toluidine, N,N-diethylaniline, N,N-diethyl toluidine, N,N-di -(2-hydroxy-ethy)- p-toluidine, N,N -bis(2-hydroxyethyl)-p-toluidine; N,N-bis(hydroxypropyl)-p-toluidine and the like. A preferred activator is N,N-di -(2-hydroxy-ethy)- p-toluidine. The curing catalysts include organic peroxides such as methylethylketone peroxides, t-butyl peroxybenzoates, benzoyl peroxides, dicumyl peroxides and the like.

While it is contemplated that the amount of inhibitor in the composition may vary widely depending on numerous factors particular to each application and contemplated use, it is generally preferred that the inhibitor is present in amounts of from about 0.005 wt% to___5 wt%, and even more preferably from___0.01 wt% to ___0.1 wt%. Optionally but preferably the polymerizable vinyl ester is soluble in reactive diluent.

### THIXOTROPTIC AGENTS

The present anchor composition may also comprise a thixotropic agent. The preferred hixotropic agent of the present invention causes the composition to become more fluid, i.e. less viscous, when agitated, stirred or mixed or otherwise subjected to such shear forces. It is useful to include a thixotropic agent in the anchor composition to insure that the composition has the desired viscosity during application and after the composition is applied. In addition, a thixotropic agent may be added to an anchor composition to prevent the settling of other solid components of the composition and to increase the viscosity of the composition. The thixotropic agent also facilitates dispensing of the composition because when a shear force is applied, e.g. expulsion of the composition from a dispensing gun, the thixotropic agent makes the resulting composition less viscous, and therefore, more easy to expel from the cartridges of the dispensing gun. The thixotropic agent may be found in the anchor composition in an amount in the range of from___ 0.5 wt% to____10 wt%, and more preferably from___1 wt% to____5 wt%. Typically, the use of thixotropic agent is not needed when the anchor composition is dispensed using a glass capsule. An example of a suitable preferred thixotropic agent is fumed silica. Also contemplated are the various silicas made by the various methods known in the art, including pyrolysis of silicon tetrachloride and precipitation. Other suitable thixotropic agents include the various organoclays and various fibers. In some anchor compositions, the thixotropic agent may also be considered a filler. A suitable silica thixotropic agent is Aerosil.RTM. R202, which may be obtained from the Degussa Corporation of Ridgefield Park, NJ. It is also contemplated that more than one thixotropic agent may be used in the anchor composition

### FILLERS

The anchor composition of the present invention also preferably comprises one or more fillers. Fillers are typically added to compositions for various reasons, including to reduce shrinkage of the composition that may occur during polymerization and to reduce the cost of the composition, as fillers replace a portion of the more expensive components of the anchor composition. The filler may also provide for improved bond strength of the anchor composition when polymerized and help to prevent the settling out of other particulate materials in the composition. Generally, the filler is an inert, inorganic, solid, particulate compound, By inert it is meant that the filler does not detrimentally interact with any other component of the composition. Examples of suitable fillers include, but are not limited to, crushed glass, glass beads, quartz, silica, limestone, alumina, various clays, diatomaceous earth and other materials such as mica, flint powder, kryolite, alumina trihydrate, talc, sand, pyrophyllite, blanc fixe, granulated polymers such as polyethylene, hollow glass and polymer beads, zinc oxide, novaculite, calcium sulfate and mixtures thereof. Preferred fillers are quartz, glass and silica. Fillers may be treated with coupling agents to improve bonding to the polymer matrix. Examples of coupling agents which may be used to treat the fillers are silanes, titanates and zirconates.

Preferably, the present compositions contain fillers an amount of from about 10% to 80% by weight of the composition, more preferably from ___20 wt% to ___70wt%, and even more preferably from___30 wt% to ___60wt %.

The exact particle size of the filler will depend on the desired consistency of the composition and the method for dispensing the anchor composition. For example, fillers having a large average particle size (300 µm and larger) may clog static mixers that are used in dispensing systems such as dispensing guns. On the other hand, fillers having a large particle size can be used in glass capsules. Preferred particle sizes are about 50. µm or larger. However, in cases where filler is used to prevent the settling out of other particulate matter in a composition, a particle size smaller than 50 µm may be desired. It is also recognized that filler having a particle size less than 50 µm may be used in combination with other fillers, some having particle sizes greater than 50 µm.

### OTHER ADDITIVES

The anchor composition may also contain a fragrance. A fragrance is used in an anchoring composition to mask any odor of the composition that is thought undesirable or unpleasant. A preferred fragrance is Atlanta Fragrance 16332. Similarly, a pigment may be employed to color the anchoring composition. Suitable pigments are known to those skilled in the art.

### PREFERRED TWO COMPONENT ADHESIVES

In one embodiment of the present invention, the anchor composition is formed by mixing a first composition and a second composition. The first composition contains the polymerizable vinyl ester compound and preferably also at least a substantial amount, and preferably substantially all of the reactive diluent if present. The first composition also preferably contains an inhibitor to inhibit curing of the adhesive until desired, and the second composition contains a free-radical catalyst. When the first composition and the second composition are combined, polymerization occurs.

In a preferred embodiment, the first composition comprises vinyl ester and filler. The first composition may also comprise a thixotropic agent, a chain transfer agent, a free-radical inhibitor, a fragrance, an activator, a promoter and/or a pigment. The second composition preferably contains a free-radical catalyst. The second composition may also include filler, a thixotropic agent, a fragrance, and/or a pigment. It is also contemplated that both the first composition and the second composition may contain some of the same components.

The weight ratio of the first composition to the second composition may be in the range of 1 to 1 to ___40 to 1. Preferably, the weight ratio of the first composition (Part A) to the second composition (Part B) is ___10 to 1.

### EXAMPLES

The following examples are provided to illustrate particular embodiments of the invention,

### EXPERIMENTAL PROTOCALS

### Preparation of Two Part Anchor Compositions

The appropriate amounts of polymerizable vinyl ester resin are prepared. To the resin is add the appropriate amount of inhibitor, activator, fragrance and other ingredients. The composition is mixed, preferably using a dispenser. Next, the thixotropic agent is added with shear mixing followed by addition of the filler. If more than one filler is to be included in the anchor composition, it is preferable to add the first filler, then mix, then add the second filler and so on until the desired number of fillers have been added to the composition until Part A of the composition is complete. The same general procedure as described above is used to make Part B consisting of catalyst thixotropic agent, filler, pigment and other ingredients.

The above preparation procedure is used for the examples, except for the comparative example, in which case the adhesive was prepared in accordance with the instructions provided.

### Pull Out Performance

A medium weight concrete block approximately 0,1 X 0,2X0,4 m (4" X8"X16") substantially free of surface moisture is used. Tipically, five replicate pull out tests are run for each adhesive composition tested. First, three equally spaced 110 mm deep holes approximately 14 mm wide are drilled in the 0,2 X 0,4m (8"X16") side of the concrete block. Then, the holes are cleaned with a brush, with compressed air and a vacuum. An adhesive composition is injected into the drilled holes, and a 2,5 mm-8 threads per cm X1,2 cm ¼"-20 threads per inch.X12mm stainless steel rod type 304 is inserted into the adhesive-containing hole with a twisting motion. The time before pull out testing (also called cure time) is in the range of 0.5 hours to 72 hours, as reported. The stainless steel rod was then connected to an Instron universal tester, Model TTC, Instron Corporation, Canton, Mass., and the rods are pulled at 5 mm (0.2") minute until failure. The maximum load and failure type was then recorded. Preferably, in an acceptable anchor composition, the pull out performance at one hour at a temperature of 23°C is at least about 55 KN, at 24 hour at a temperature of 23° C is at least 65 KN, and after 24 hours at 80°C is measured at a temperature of 80°C at least 45. Most preferably, the material that has been anchored to the concrete or masonry, or the concert or masonry itself fails before the adhesive composition.

### COMPARATIVE EXAMPLE

A leading commercially available anchor adhesive sold under the trade designation HY-150 by Hilti Aktiengesellschaft of Schaan, Liechtenstein is prepared and used in accordance with the instructions provided to measure various performance parameters as outlined in the above protocols. The following results are observed:
Adhesive - HY-150
Pullout, 1 Hr. (KN) - 53
Pullout, 24 Hr. (KN) - 61.8
Pullout, 80°C (KN) - 41.6
Gel Time, min. (Trombomat) - 9
Pumpability - good

### EXAMPLE 1

A two part adhesive composition having a Part A:Part B weight ratio of 10:1 and the following formulations for Part A and Part B is prepared and used according to the above protocols:

| PART A | | | |
|---|---|---|---|
| COMPONENT | Wt.% in Part A | Wt% in A+B | pbwa |
| Vinyl ester resin* | 42.88 | 38.99 | 88.88 |
| Inhibitor (hydroquinone) | 0.03 | 0.03 | 0.06 |
| Initiator (Pergaquick A-150) | 0.34 | 0.31 | 0.70 |
| Thixotropic Agent | 3.19 | 2.90 | 0 |
| (Acrosil R202) | | | |
| Filler (Sand) | 53.53 | 48.67 | 0 |
| Pigment (Black) | 0.02 | 0.02 | 0 |

| | | | |
|---|---|---|---|
| • The vinyl ester resin comprises about 35 wt% polymerizable vinyl ester compound(s) in accordance with the present invention and about 65 wt% of reactive monomer consisting of vinyl toluene. | | | |

| PART B | | | |
|---|---|---|---|
| COMPONENT | Wt.% in Part B | Wt% in A+B | pbwa |
| Catalyst (Cadox 40 E) | 49.93 | 4.54 | 10.35 |
| Thixotropic Agent | 1.90 | 0.17 | 0 |
| (Tixogel VZ) | | | |
| Filler (Sand) | 47.18 | 4.29 | 0 |
| Pigment (Ti02) | 0.99 | 0.09 | 0 |

The measure various performance parameters as outlined in the above protocols are measure for the adhesive composition and the following results are observed:
Pullout, I Hr. (KN - 70
Pullout, 24 Hr. (KN) - 75
Pullout, 80°C (KN) - 55
Gel Time, min. (Trombomat) - 7
Pumpability - good

## Claims

1. A curable adhesive composition for anchoring materials in or to concrete or masonry comprising:
a polymerizable vinyl ester corresponding to formula. 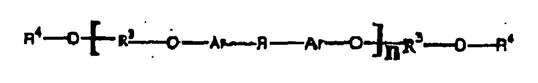 wherein
Ar is substituted or unsubstituted aromatic radical with a valence of at least two,
R is independently a substituted or unsubstituted divalent radical derived from alky or arylalkyl,
R³ Is a hydroxy substituted divalent radical derived from an alkyl radical,
R⁴ is independently a vinyl carboxy radical or a epoxy radical, or R, provided that the ratio of n to the number of vinyl carboxy R⁴ groups is, on average for the composition, from about 0.4 to about 2.0, end n is from 1 to 5;
b. an ethylenically unsaturated monomer reactive with said polymerizable vinyl ester;
c. curing catalyst; and
d. activator.

2. The adhesive composition of claim 1, wherein said polymerizable vinyl ester is present in the composition in amounts of from 10 wt% to 30 wt% of the composition.

3. The adhesive composition of claim 2, wherein said polymerizable vinyl ester is present in the composition in amounts of from 10 wt% to 25 wt% of the composition.

4. The adhesive composition of claim 1, wherein said polymerizable vinyl ester is present in the adhesive composition in amounts of from 70 parts by weight based on active components (pbwa) to 95 parts by weight based on active components (pbwa).

5. The adhesive composition of claim 4, wherein said polymerizable vinyl ester is present in the adhesive composition in amounts of from 85 parts by weight based on active components (pbwa) to 95 parts by weight based on active components (pbwa).

6. The adhesive composition of claim 1, wherein said ethylenically unsaturated monomer comprises vinyl toluene.

7. The adhesive composition of claim 6, wherein said ethylenically unsaturated monomer consists essentially of vinyl toluene.

8. The adhesive composition of one of claims 6 and 7, wherein said weight ratio of vinyl ester to said ethylenically unsaturated monomer is from 0.8 to 3.

9. The adhesive composition of claim 8 wherein said weight ratio of vinyl ester to said ethylenically unsaturated monomer is 0.8 to 1.5.

10. The adhesive composition of one of claims 1 to 9, having a pull out performance at one hour at a temperature of 23° C of at least 60 KN.

11. The adhesive composition of one of claims 1 to 10, having a pull out performance at 24 hour at a temperature of 23 °C of at least 70 KN.

12. The adhesive composition of one of claims 1 to 11, having a pull out performance after 24 hours at a temperature of 80°C of at least 45 KN.
